# EUROPÄISCHE PATENTANMELDUNG

(11) **EP 3 513 912 A1**
(43) Veröffentlichungstag der Anmeldung: **24.07.2019**
(21) Anmeldenummer: 18152681.5
(22) Anmeldetag: 22.01.2018
(51) Int. Cl.: B25B 27/10, B23D 15/00

(54) **HANDGEFÜHRTES PRESSGERÄT**

(71) Anmelder: Von Arx AG, 4450 Sissach (CH)
(72) Erfinder: RUCH, Matthias, 79588 Efringen-Kirchen (DE); Kreuzer, Rudolf, 5033 Buchs (CH)
(74) Vertreter: Mader, Joachim

(57) **Zusammenfassung**

Die vorliegende Erfindung betrifft ein handgeführtes Pressgerät (1), insbesondere zum Crimpen oder Schneiden von Werkstücken. Das Gerät weist ein Gehäuse (2) sowie eine Werkzeugaufnahme (24) zur Aufnahme eines Werkzeugs (40) auf. Ein linear am Gehäuse (2) beweglich eingerichtetes Betätigungselement (20) wird über einen Elektromotor (30) angetrieben um das Werkzeug zu betätigen. Die Kopplung von Elektromotor und Betätigungselement erfolgt über ein Planetengetriebe (10).

## Beschreibung

### 1. Technisches Gebiet

Die vorliegende Erfindung betrifft handgeführte Pressgeräte, wie insbesondere zum Crimpen oder Schneiden von Werkstücken, insbesondere zur Bearbeitung von rohrförmigen Werkstücken. Insbesondere eignet sich das erfindungsgemäße Pressgerät zum Verbinden von Rohren mit einem Pressfitting durch Pressen, ist hierauf jedoch nicht beschränkt.

### 2. Stand der Technik

Aus dem Stand der Technik sind insbesondere hydraulisch betriebene Pressgeräte vorbekannt, in denen ein als Kolben ausgeführtes Betätigungselement in einem Hydraulikzylinder hin und her bewegt werden kann, um Arbeit zu verrichten. Bei Druckbeaufschlagung des Hydraulikzylinders wird der Kolben mit großer Kraft nach vorne bewegt und betätigt bspw. ein am Kopf des Pressgeräts aufgenommenes Werkzeug.

Ein typischer Vertreter derartiger hydraulischer Pressgeräte ist aus der EP 0 712 696 A1 vorbekannt. Dieses Pressgerät weist eine gabelförmige Aufnahme auf, in der ein auswechselbarer Werkzeugkopf, wie etwa eine Zange oder Ähnliches, aufgenommen werden kann. Im Gehäuse des Pressgeräts ist ein Elektromotor angeordnet, der eine Hydraulikpumpe antreibt. Die Hydraulikpumpe wirkt wiederum auf einen Kolben ein, der linear beweglich am Gehäuse eingerichtet ist und als Betätigungselement zur Betätigung des eigentlichen Werkzeugs, wie etwa eine Zange oder Ähnliches, dient. Die Verwendung einer hydraulischen Antriebseinheit hat den Vorteil, dass sehr große Kräfte erzeugt werden können bei einem verhältnismäßig kleinen Aufbau und einer zuverlässigen Konstruktion. Nachteilig ist jedoch, dass derartige Geräte relativ aufwendig zu warten sind, da bspw. Dichtungen regelmäßig ausgetauscht werden müssen, um einen Austritt von Öl zu vermeiden.

Aus der EP 2 135 709 A2 desselben Anmelders ist ein weiteres hydraulisches Pressgerät vorbekannt, bei dem ein Elektromotor eine Hydraulikpumpe antreibt, die wiederum auf eine hydraulische Kolbenzylindereinheit wirkt. Am Gehäuse ist ein Betätigungselement in Form eines Rollenhalters vorgesehen, an dem zwei Rollen gehalten sind, die bei der linearen Bewegung des Betätigungselements auf ein Werkzeug einwirken, um dieses zu betätigen. Das Werkzeug ist wechselbar in einer Werkzeugaufnahme des Pressgeräts gehalten. Der Elektromotor treibt eine Hydraulikpumpe an und ist mit dieser über ein Getriebe verbunden. In der gezeigten Ausführungsform wird hierfür ein herkömmliches Planetengetriebe vorgeschlagen. Das Planetengetriebe dient dabei ausschließlich zur Reduktion der Drehgeschwindigkeit des Elektromotors und überträgt die Rotation des Elektromotors auf eine rotierende Exzenterwelle, die wiederum eine Pumpe für das Hydraulikfluid antreibt.

Den vorbekannten Lösungen ist gemeinsam, dass sie alle hydraulisch wirken, d.h. hydraulische Pressgeräte sind. Der Elektromotor dient als Antrieb für eine Hydraulikpumpe, die wiederum ein Hydraulikfluid unter Druck setzt, um ein linear am Gehäuse beweglich eingerichtetes Betätigungselement zu bewegen.

Es ist eine Aufgabe der vorliegenden Erfindung ein handgeführtes Pressgerät bereitzustellen, welches zuverlässig und sicher zu handhaben ist und ohne Hydraulikelemente auskommt. Es ist insbesondere eine Aufgabe ein Pressgerät bereitzustellen, bei dem ein linearer Vorschub eines im Gehäuse eingerichteten Betätigungselements über rein mechanische Mittel erfolgen kann. Durch den Verzicht auf Hydraulikelemente reduziert sich der Wartungsaufwand des Pressgeräts erheblich.

Diese und weitere Aufgaben, welche beim Lesen der folgenden Beschreibung ersichtlich werden, werden mit einem handgeführten Pressgerät nach Anspruch 1 gelöst.

### 3. Inhalt der Erfindung

Die Erfindung betrifft ein handgeführtes Pressgerät, wie insbesondere zum Bearbeiten von rohrförmigen Werkstücken, etwa durch Crimpen oder Schneiden. Das Pressgerät umfasst ein Gehäuse und eine Werkzeugaufnahme zur Aufnahme eines Werkzeugs. Die Werkzeugaufnahme ist vorzugsweise eingerichtet zur wechselbaren Aufnahme unterschiedlicher Werkzeugtypen, wie etwa Crimpzangen, Lochstanzen o.ä. Die Werkzeugaufnahme kann jedoch auch fest mit einem Werkzeug gekoppelt bzw. verbunden oder integral ausgebildet sein. Zur Betätigung eines in der Werkzeugaufnahme aufgenommenen Werkzeugs ist am Gehäuse ein Betätigungselement linear beweglich eingerichtet. Weiter umfasst das Pressgerät einen Elektromotor zum Antrieb des Betätigungselements, das heißt, um das Betätigungselement bewegen zu können. Hierzu ist ein Planetengetriebe vorgesehen, welches eingangsseitig mit der Welle des Elektromotors, direkt oder indirekt, gekoppelt ist und ausgangsseitig mechanisch, vorzugsweise direkt, mit dem Betätigungselement gekoppelt ist, um das Betätigungselement linear zu bewegen. Das Besondere an dem erfindungsgemäßen Planetengetriebe ist dabei, dass zumindest zwei Elemente des Planetengetriebes linear relativ zueinander beweglich eingerichtet sind, und zwar so, dass eine Rotation eines Elementes des Planetengetriebes zu einer linearen Bewegung eines anderen Elements des Planetengetriebes führt.

Die grundsätzliche Funktionsweise von Planetengetrieben ist dem Fachmann bekannt. Planetengetriebe werden auch als Umlaufrädergetriebe bezeichnet und haben als besonderes Merkmal, dass die Antriebs- und Abtriebswelle parallel zueinander eingerichtet sind. Planetengetriebe werden typischerweise eingesetzt, um Drehzahlgeschwindigkeitsunterschiede herbeizuführen. Im Eingangs zitierten Stand der Technik dient ein Planetengetriebe beispielsweise dazu, die bauartbedingt hohen Drehzahlen des Elektromotors in für die Hydraulikeinheit geeignete, niedrigere Drehgeschwindigkeiten umzusetzen. Das Planetengetriebe dient somit ausschließlich zur Übermittlung von Drehbewegungen. Das in der vorliegenden Erfindung vorgeschlagene Planetengetriebe ist jedoch derart ausgebildet, dass die Rotation des Elektromotors zu einer linearen Bewegung eines Elements des Planetengetriebes führt, so dass diese lineare Bewegung des Elements des Planetengetriebes zur Bewegung des Betätigungselements dienen kann. Im einfachsten Fall kann dies beispielsweise dadurch erreicht werden, dass das Hohlrad des Planetengetriebes linear unbeweglich, aber drehbar im Gehäuse gehalten ist und das Sonnenrad bzw. Sonnenradelement drehbar und linear beweglich eingerichtet ist. Durch die Wahl einer beispielsweise geeigneten Schrägverzahnung kann die von dem Hohlrad (über die Planetenräder) übertragene Drehbewegung zu einer linearen Bewegung des Sonnenradelements führen.

Das Gehäuse des Pressgeräts ist vorzugsweise zumindest teilweise aus einem Kunststoff gefertigt, und zwar insbesondere aus einem thermoplastischen Kunststoff. Das Betätigungselement kann jede Form und Struktur haben, die eine Betätigung des Werkzeugs erlaubt. Insbesondere kann das Betätigungselement mit dem Werkzeug verbunden oder sogar mit diesem integral ausgebildet sein. Die Formulierung, dass das Betätigungselement beweglich "am" Gehäuse eingerichtet ist, umfasst dabei viele verschiedene konstruktive Lösungen und insbesondere auch Lösungen, bei denen das Betätigungselement außerhalb des Gehäuses eingerichtet ist, innerhalb des Gehäuses oder Mischformen hiervon.

Vorzugsweise sind die Welle des Elektromotors und die zentrale Welle des Planetengetriebes parallel angeordnet. Eine parallele Anordnung der beiden maßgeblichen Wellen erleichtert die Kopplung des Elektromotors mit dem Planetengetriebe.

Weiter bevorzugt sind die beiden Wellen parallel nebeneinander angeordnet. Eine parallele, nebeneinanderliegende Anordnung erlaubt eine besonders kompakte Bauweise des Pressgeräts. Beispielsweise ist es somit möglich, dass die Komponenten Elektromotor und Planetengetriebe nicht linear hintereinander angeordnet sind, sondern nebeneinander, wodurch die Länge des Pressgeräts vorteilhaft reduziert werden kann. Eine geringe Länge ist vorteilhaft, da bei der Verwendung derartiger Pressgeräte häufig nur ein begrenzter Platz zur Verfügung steht, wenn beispielsweise Rohrleitungen in Installationsschächten mit dem Pressgerät bearbeitet werden sollen. Grundsätzlich ist es dabei bevorzugt, dass die beiden Wellen in einem Abstand von 5 bis 30 cm angeordnet sind, mehr bevorzugt von 5 bis 20 cm und noch mehr bevorzugt von 6 bis 18 cm. Dabei ist mit dem Abstand der beiden parallelen Wellen zueinander der kürzeste Abstand zwischen den gedachten Drehachsen der Wellen gemeint.

Vorzugsweise umfassen die Elemente des Planetengetriebes ein zentrales Sonnenradelement, ein Hohlrad und mehrere Planetenräder, welche Planetenräder an einem Planetenradträger getragen sind. Das zentrale Sonnenradelement und die Planetenräder sind innerhalb des Hohlrads angeordnet und über entsprechende Zähne miteinander verzahnt, so dass beispielsweise eine Rotation des Hohlrads auf die Planetenräder übertragen und von diesen auf das Sonnenradelement übertragen werden kann. Dieser klassische Aufbau für ein Planetengetriebe bietet eine robuste und sichere Umsetzung des erfindungsgemäßen Prinzips.

Vorzugsweise sind von den Elementen das Sonnenradelement und das Hohlrad linear relativ zueinander beweglich eingerichtet und dabei entweder das Hohlrad oder das Sonnenradelement linear unbeweglich im Gehäuse gelagert. Beispielsweise kann das Hohlrad im Gehäuse linear beweglich gelagert sein, d.h. in Richtung seiner Drehachse, wohingegen das Sonnenradelement drehbar aber linear unbeweglich im Gehäuse gelagert ist. In einer derartigen Konstellation würde der Elektromotor mit dem Sonnenradelement gekoppelt sein und dieses in Drehung versetzen. Die Drehbewegung des Sonnenradelements wird über die Planeten auf das Hohlrad übertragen. Bei einer geeigneten Innenverzahnung des Hohlrads, wie beispielsweise einer geeigneten Schrägverzahnung, führt die Drehbewegung der Planeten zu einem linearen Vorschub des Hohlrads. Dieser lineare Vorschub dient dann dazu, das mechanisch mit dem Planetengetriebe gekoppelte Betätigungselement linear zu bewegen.

Weiter vorzugsweise ist das Planetengetriebe derart eingerichtet und im Gehäuse angeordnet, dass eine Rotation des Sonnenradelements zu einer relativen linearen Bewegung des Hohlrads führt oder dass eine Rotation des Hohlrads zu einer relativen linearen Bewegung des Sonnenradelements führt. Dies kann beispielsweise durch geeignete Schrägverzahnungen an den verschiedenen Elementen bewirkt werden.

Vorzugsweise ist das Hohlrad drehbar, aber linearer unbeweglich im Gehäuse gelagert und eine Rotation des Hohlrads führt zu einer relativen linearen Bewegung des Sonnenradelements und wobei das Sonnenradelement mit dem Betätigungselement verbunden ist, um dieses linear zu bewegen. Das Sonnenradelement kann beispielsweise über weitere mechanische Mittel mit dem Betätigungselement verbunden sein, oder mit diesem befestigt oder integral ausgebildet sein. Eine Bewegung des Sonnenradelements aufgrund der Rotation des Hohlrads, welches in diesem Fall von dem Elektromotor angetrieben wird, führt damit zu einer linearen Bewegung des Betätigungselements und dieses kann somit ein Werkzeug betätigen, das in der Werkzeugaufnahme aufgenommen ist. Diese Konfiguration ist besonders bevorzugt, da sich das Sonnenradelement zentral in der Mitte des Planetengetriebes befindet und vorzugsweise parallel zur Bewegungsrichtung des Betätigungselements ausgerichtet ist. Somit kann die lineare Bewegung des Sonnenradelements direkt, d.h. 1/1, zu einer entsprechenden linearen Bewegung des Betätigungselements führen.

Vorzugsweise umfasst das Sonnenradelement eine Schneckenwelle. Das Sonnenradelement kann hierzu selbst zumindest teilweise als Schneckenwelle ausgebildet sein oder eine Schneckenwelle als separates oder integrales Teil umfassen. Insbesondere kann das Sonnenradelement aus einem oder mehreren Teilen bestehen, aus denen es sich zusammensetzt. Beispielsweise kann es in Form eines länglichen Bolzens ausgebildet sein und nur über einen Teil seiner Oberfläche mit einem Schneckengewinde versehen sein. Eine Rotation des Hohlrads bewirkt über die Planetenräder damit beispielsweise eine lineare Bewegung des Sonnenradelements, wenn dieses linear beweglich im Gehäuse eingerichtet ist.

Vorzugsweise ist die Bewegungsrichtung des Betätigungselements und die Achse der Schneckenwelle parallel angeordnet und besonders vorzugsweise koaxial angeordnet. Eine parallele Anordnung, und insbesondere eine koaxiale Anordnung erlauben es, dass Bewegungsrichtung und Achse der Schneckenwelle miteinander fluchten, so dass keine weitere Umlenkung der Bewegung der Schneckenwelle, wenn diese etwa linear relativ zum Hohlrad bewegt wird, vorgenommen werden muss, um das Betätigungselement anzutreiben.

Grundsätzlich ist es bevorzugt, dass das Planetengetriebe direkt mechanisch mit dem Betätigungselement gekoppelt ist. Direkt mechanisch bedeutet in diesem Fall, dass keine weiteren Umsetzungen, Getriebe, Hydraulikbestandteile etc. zwischen dem entsprechenden Element des Planetengetriebes, welches sich linear im Gehäuse bewegt, und dem Betätigungselement befindet, so dass eine Bewegung des Elementes des Planetengetriebes 1 zu 1 zu einer entsprechenden Bewegung des Betätigungselements führt.

Vorzugsweise ist die Welle des Elektromotors mit dem Planetengetriebe über ein weiteres Getriebe und/oder einen Riemen verbunden. Die Kopplung von Elektromotor und Planetengetriebe über derartige weitere Bauelemente erlaubt es, den Elektromotor bspw. neben dem Planetengetriebe anzuordnen, d.h. derart, dass die entsprechenden Wellen von Elektromotor und Planetengetriebe parallel nebeneinander angeordnet sind. Dies bietet gegenüber einer fluchtenden, in einer Linie angeordneten Konfiguration den Vorteil, dass das Pressgerät kürzer gestaltet werden kann, was handhabungstechnisch Vorteile bietet. Beispielsweise kann die Welle des Elektromotors mit dem entsprechenden Element des Planetengetriebes über einen Zahnriemen verbunden werden.

Vorzugsweise ist der Elektromotor ein bürstenloser Motor. Noch weiter bevorzugt umfasst das Pressgerät eine Steuerung, die eingerichtet ist, um mittels der Hallsensoren des bürstenlosen Elektromotors die Drehzahl des Motors und/oder die zurückgelegten Umdrehungen des Motors zu erfassen. Bürstenlose Elektromotoren bieten den Vorteil, dass sie besonders wartungsarm und verschleißfrei laufen. Zudem bieten sie über ihre Hallsensoren die Möglichkeit, dass eine geeignete Steuerung die Drehzahl sowie die zurückgelegten Umdrehungen des Motors misst. Somit ist es möglich, die Bewegung des linear beweglichen Elements des Planetengetriebes, und damit des Betätigungselements, zu bestimmen. Hierdurch ist eine kostengünstige Möglichkeit der Bestimmung des Betätigungswegs möglich, so dass das Betätigungselement nur exakt so weit vorbewegt wird, wie dies für den gegebenen Anwendungsfall erwünscht ist.

Das Pressgerät umfasst vorzugsweise eine Steuerung, die eingerichtet ist, den Motorstrom zu erfassen und den Motor in Abhängigkeit eines erfassten Stromwerts oder eines Verlaufs des Motorstromwerts zu stoppen. Beispielsweise erhöht sich beim Betätigen des Werkzeugs die entsprechende auf das Betätigungselement wirkende Gegenkraft, wodurch sich ebenfalls die Kraft auf das linear bewegliche Element des Planetengetriebes erhöht. Dies wiederum führt zur einem erhöhten Antriebsdrehmoment des nicht linear beweglichen Elements des Planetengetriebes, was letztendlich, durch die Kopplung von Planetengetriebe und Elektromotor, zu einer Erhöhung des Motorstroms führt, die gemessen werden kann. Auf diese Weise, kann der Pressvorgang durch die Steuereinrichtung überwacht werden.

Weiter vorzugsweise ist das Planetengetriebe derart eingerichtet, dass eine Umkehrung der Motordrehrichtung zu einer Umkehrung der linearen Bewegungsrichtung des Betätigungselements führt. Auf diese Weise kann nach einem abgeschlossenen Arbeitsvorgang das Betätigungselement wieder zurück in seine Ausgangsposition verfahren werden, indem lediglich die Motordrehrichtung des Elektromotors geändert wird.

Grundsätzlich bevorzugt weist das Pressgerät einen Pistolengriff auf. Auf diese Weise ist eine besonders ergonomische Handhabung des Pressgeräts gegeben. Besondere Vorteile ergeben sich, wenn die entsprechenden Wellen von Elektromotor und Planetengetriebe parallel nebeneinander angeordnet sind, da hierdurch eine sehr kompakte Bauform möglich ist. Der Pistolengriff bietet bei einer derart kompakten Bauform eine sichere Handhabung des Geräts und erlaubt eine noch weitere Verkürzung der Länge des Geräts, da der Auslöseschalter und insbesondere ein gegebenenfalls vorhandener Akku zur Energieversorgung des Geräts am Pistolengriff vorgesehen werden kann.

Die vorliegende Erfindung bietet grundsätzlich den Vorteil, dass keine hydraulischen Komponenten benötigt werden. Das heißt, das vorliegende Pressgerät ist vorzugsweise kein hydraulisches Pressgerät.

### 4. Ausführungsbeispiele

Im Folgenden wird die folgende Erfindung unter Bezugnahme auf die beiliegenden Figuren näher beschrieben. Es zeigen:
Figur 1 schematisch ein teilgeschnittenes handgeführtes Pressgerät gemäß der Erfindung;
Figur 2 eine schematische Prinzipskizze der Antriebskomponenten;
Figur 3 eine schematische dreidimensionale Außenansicht des Pressgeräts; und
Figur 4 die Ansicht von Figur 3 mit einem eingesetzten Werkzeugkopf.

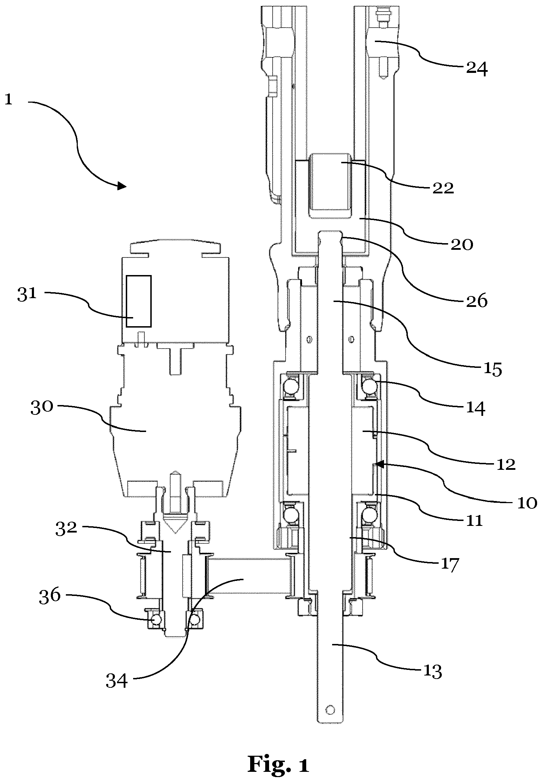

In Figur 1 ist eine schematische, teilgeschnittene Seitenansicht eines Pressgeräts 1 gemäß der Erfindung gezeigt. Das Pressgerät 1 umfasst einen Elektromotor 30 zum Antrieb eines linear beweglich eingerichteten Betätigungselements 20. Die Funktionsweise des Betätigungselements und der Werkzeugaufnahme entspricht prinzipiell derjenigen aus der eingangs zitierten Druckschrift EP o 712 696 A1, auf die hiermit vollumfänglich Bezug genommen wird. Das Betätigungselement 20 ist in einer gabelförmigen Werkzeugaufnahme 24 geführt und kann linear relativ zum Gehäuse 2 hin und her bewegt werden. Am distalen Ende sind Rollen 22 zur Betätigung eines in der Werkzeugaufnahme aufgenommenen Werkzeugs vorgesehen (Werkzeug nicht gezeigt). Im Gehäuse ist weiter ein Planetengetriebe 10 vorgesehen. Das Getriebe 10 weist ein Hohlrad 11 auf, welches über Lager 14 drehbar im Gehäuse 2 gelagert ist. Zentral im Hohlrad 11 ist ein Sonnenradelement 13 vorgesehen, welches über Planeten 12 mit dem Hohlrad 11 operativ verbunden ist.

Das Sonnenradelement 13 ist hier als Bolzen ausgebildet der einen Bereich mit vergrößertem Querschnitt aufweist, der mit einer Schneckenverzahnung bzw. Schneckenwelle 17 versehen ist. Das Sonnenradelement 13 umfasst damit eine Schneckenwelle, die integral mit dem Sonnenradelement 13 ausgebildet ist. An einem Ende befindet sich ein Kolbenfortsatz 15, der in einer Bohrung 26 im Betätigungselement 20 eingesetzt ist. Auf diese Weise ist das Betätigungselement 20 mit dem Planetengetriebe 10 direkt, also ohne mechanische oder hydraulische Umlenkungen, mechanisch gekoppelt. Das Sonnenradelement 13 ist linear relativ zum Hohlrad 11 beweglich eingerichtet. Bei einer Rotation des Hohlrads 11 greifen die Planeten 12 in die Verzahnung der Schneckenverzahnung 17 ein und da das Sonnenradelement 13 linear beweglich eingerichtet ist, kann somit das Element 13 linear bewegt werden. Mit anderen Worten, eine Rotation des Hohlrads 11 führt zu einer relativen linearen Bewegung des Sonnenradelements 13 und da das Sonnenradelement 13 mit dem Betätigungselement 20 verbunden ist, wird dieses linear mitbewegt. Man erkennt aus der Abbildung, dass die Bewegungsrichtung des Betätigungselements und die Achse des Sonnenradelements 13 bzw. der Schneckenwelle 17 parallel zur Bewegungsrichtung des Betätigungselements angeordnet sind und tatsächlich koaxial angeordnet sind. Auf diese Weise wird eine lineare Bewegung des Sonnenradelements 13 direkt und unmittelbar in eine lineare Bewegung des Betätigungselements 20 überführt.

Die Welle 32 des Elektromotors 30 ist über einen Zahnriemen 34 mit dem Hohlrad 11 gekoppelt. Lager 36, Welle 32 und Riemen 34 sind von Teilen des Gehäuses 2 im Betrieb abgedeckt, die vorliegend jedoch zur besseren Darstellung weggelassen wurden. Eine Rotation der Welle 32 wird über den Riemen 34 direkt in eine Rotation des Hohlrads 11 umgesetzt. Eine Umkehrung der Motordrehrichtung führt dabei direkt zu einer Umkehrung der Drehrichtung des Hohlrads 11 und somit zu einer Umkehrung der linearen Bewegungsrichtung des Sonnenradelements bzw. der Schneckenwelle 17. Das Pressgerät 1 verfügt zudem über eine Steuerung 31.

Man erkennt aus der Figur 1, dass die Welle 32 des Elektromotors und die zentrale Welle des Planetengetriebes, das heißt im vorliegenden Falle die Welle des Sonnenradelements 13, parallel nebeneinander angeordnet sind. Der Abstand der beiden Wellen beträgt in der Praxis beispielsweise 20 cm, so dass eine kompakte Bauform möglich ist.

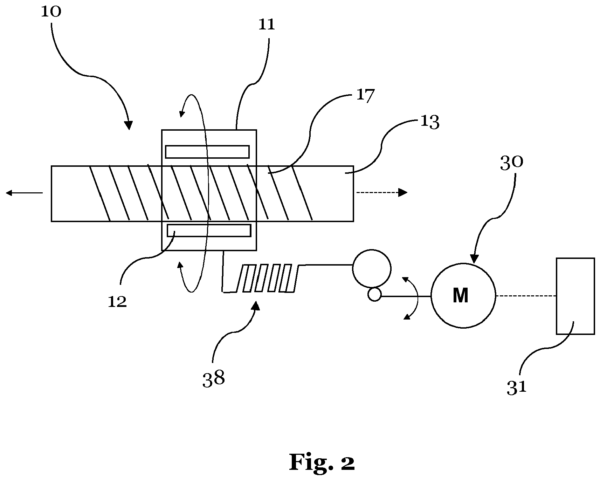

In Figur 2 ist eine rein schematische Darstellung der Funktionsprinzipien des Antriebs gezeigt. Dabei werden gleiche Bezugszeichen für die entsprechenden Elemente der Figur 1 verwendet. Das Planetengetriebe 10 weist ein drehbar gelagertes Hohlrad 11 auf, welches über Planeten bzw. Planetenräder 12 mit einem zentral angeordneten Sonnenradelement 13 in Wirkverbindung steht. Das Sonnenradelement 13 verfügt über eine Schneckenwelle 17. Der elektrische Motor 30 ist im dargestellten Fall der Figur 2 über ein Umlenkgetriebe 38 mit dem Hohlrad 10 in Verbindung, so dass eine Drehung der Motorwelle des Elektromotors 30 in eine Rotation des Hohlrads 10 umgewandelt werden kann. Das Sonnenradelement 13 ist aufgrund der Schrägverzahnung der Schneckenwelle 17 und einer geeigneten Lagerung linear relativ zum Hohlrad 10 beweglich eingerichtet. Eine Änderung der Drehrichtung des Motors 30 führt zu einer Änderung der Drehrichtung des Hohlrads 10 und damit zu einer Änderung der linearen Bewegungsrichtung des Sonnenradelements 13.

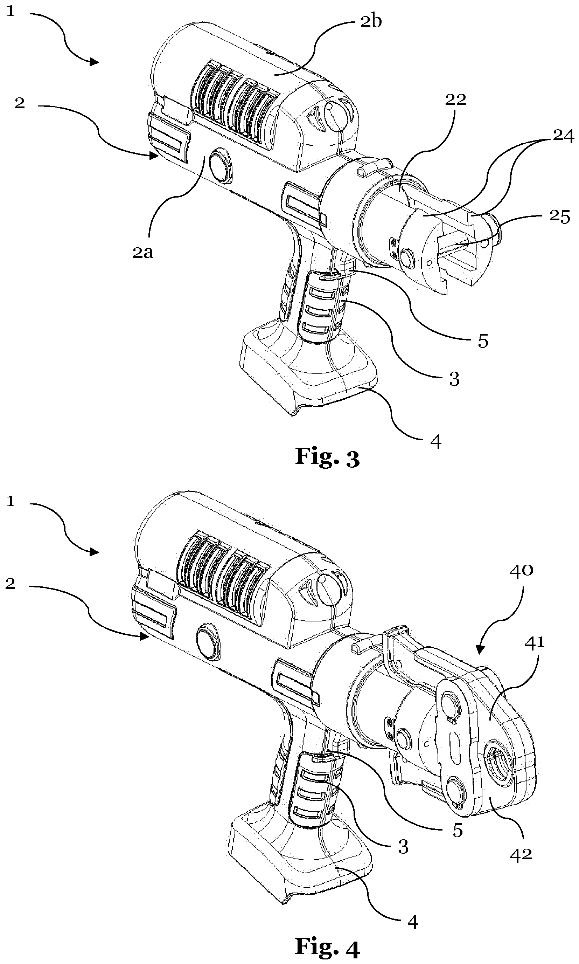

In Figur 3 ist eine schematische, dreidimensionale Ansicht des Pressgeräts 1 gezeigt. Das Pressgerät weist eine Gehäuse 2 auf, welches im Wesentlichen aus Kunststoff gefertigt ist. Das Gerät weist einen Pistolengriff 3 auf, an dem ein Auslöseschalter 5 vorgesehen ist. Am freien bzw. distalen Ende des Pistolengriffs 3 ist eine Aufnahme 4 für einen Akku (nicht gezeigt) zur Energieversorgung des Geräts vorgesehen. Auf diese Weise wird ein sehr kompaktes Gerät bereitgestellt, dass insbesondere vorteilhaft eine geringe Länge aufweist. Das Gehäuse 2 weist einen zylindrischen Grundkörper 2a auf, in dem das Planetengetriebe 10 eingerichtet ist. Der Elektromotor 30 befindet sich parallel neben dem Planetengetriebe in einem Aufsatz 2b des Gehäuses.

Aus dem vorderen Ende des Gehäuses 2 erstreckt sich die gabelartige Werkzeugaufnahme 24, in der auch das Betätigungselement 20 mit den Rollen 22 geführt ist. Die Werkzeugaufnahme 24 muss daher entsprechend stabil sein und ist aus Metall, wie insbesondere einer Aluminiumlegierung oder Stahl, gefertigt. Am distalen Ende der Werkzeugaufnahme 24 ist ein lösbarer Bolzen 25 vorgesehen. Dieser Bolzen erlaubt die Befestigung von Werkzeugköpfen, so dass diese relativ zum Gerät unbeweglich fixiert werden können.

In Figur 4 ist die Ansicht der Figur 3 erneut gezeigt, wobei hier ein Werkzeugkopf 40 in der Werkzeugaufnahme 24 des Pressgeräts 1 gehalten ist. Der dargestellte Werkzeugkopf 40 ist ein Crimpwerkzeug mit zwei zueinander beweglich eingerichteten Pressbacken 41 und 42. Bei Betätigung des Auslöseschalters 5 treibt der Elektromotor 30 das Planetengetriebe 10 an, und der Kolbenfortsatz 15 bewegt das Betätigungselement 20 und die Rollen 22 in Richtung des distalen Endes der Werkzeugaufnahme 24. Wenn die Rollen 22 in Kontakt mit den hinteren Hebelarmen der Pressbacken kommen, werden die Hebel voneinander weg nach außen bewegt, und das Crimpwerkzeug schließt sich, um bspw. einen Fitting zu verpressen.

### Bezugszeichenliste:

- 1: Pressgerät
- 2: Gehäuse
- 2a: Grundkörper
- 2b: Aufsatz
- 3: Pistolengriff
- 4: Aufnahme für Akku
- 5: Auslöseschalter
- 10: Planetengetriebe
- 11: Hohlrad
- 12: Planeten
- 13: Sonnenradelement
- 14: Lager
- 15: Kolbenfortsatz
- 17: Schneckenverzahnung/Schneckenrad
- 20: Betätigungselement
- 22: Rollen
- 24: Werkzeugaufnahme
- 25: Bolzen zur Werkzeugbefestigung
- 30: Elektromotor
- 31: Steuerung
- 32: Welle des Elektromotors
- 34: Riemen
- 38: Umlenkgetriebe
- 40: Werkzeugkopf
- 41, 42: Pressbacken

## Patentansprüche

1. Handgeführtes Pressgerät (1), insbesondere zum Crimpen oder Schneiden von Werkstücken, umfassend:
ein Gehäuse (2), welches vorzugsweise aus Kunststoff gefertigt ist;
eine Werkzeugaufnahme (24) zur Aufnahme eines Werkzeugs;
ein linear beweglich am Gehäuse (2) eingerichtetes Betätigungselement (20) zur Betätigung eines in der Werkzeugaufnahme aufgenommenen Werkzeugs;
einen Elektromotor (30) zum Antrieb des Betätigungselements (20); und
ein Planetengetriebe (10), welches eingangsseitig mit der Welle (32) des Elektromotors (30) gekoppelt ist und ausgangsseitig mechanisch mit dem Betätigungselement (20) gekoppelt ist, um das Betätigungselement (20) linear zu bewegen, wobei zumindest zwei Elemente (11; 13) des Planetengetriebes (10) linear relativ zueinander beweglich eingerichtet sind, so dass eine Rotation eines Elements (11; 13) des Planetengetriebes zu einer linearen Bewegung eines anderen Elements (11; 13) des Planetengetriebes führt.

2. Das Pressgerät nach Anspruch 1, **dadurch gekennzeichnet, dass** die Welle (32) des Elektromotors (30) und die zentrale Welle (13) des Planetengetriebes (10) parallel angeordnet sind.

3. Das Pressgerät nach Anspruch 2, **dadurch gekennzeichnet, dass** die beiden Wellen (32; 13) parallel nebeneinander angeordnet sind und vorzugsweise die beiden Wellen (32; 13) in einem Abstand von 5 bis 30 cm angeordnet sind, mehr bevorzugt von 5 bis 20 cm und noch mehr bevorzugt von 6 bis 18 cm.

4. Das Pressgerät nach einem der vorhergehenden Ansprüche, **dadurch gekennzeichnet, dass** die Elemente (11, 12, 13) des Planetengetriebes (10) ein zentrales Sonnenradelement (13), ein Hohlrad (11) und mehrere Planetenräder (12) umfassen, welche Planetenräder (12) an einem Planetenradträger getragen sind.

5. Das Pressgerät nach dem vorhergehenden Anspruch, **dadurch gekennzeichnet, dass** das Sonnenradelement (13) und das Hohlrad (11) linear relativ zueinander beweglich eingerichtet sind und entweder das Hohlrad (11) oder das Sonnenradelement (13) linear unbeweglich im Gehäuse (2) gelagert ist.

6. Das Pressgerät nach einem der vorhergehenden Ansprüche 5 oder 6, **dadurch gekennzeichnet, dass** das Planetengetriebe (10) derart eingerichtet und im Gehäuse (2) angeordnet ist, dass eine Rotation des Sonnenradelements (13) zu einer relativen linearen Bewegung des Hohlrads (11) führt oder dass eine Rotation des Hohlrads (11) zu einer relativen linearen Bewegung des Sonnenradelements (13) führt.

7. Das Pressgerät nach einem der vorhergehenden Ansprüche 4 bis 6, **dadurch gekennzeichnet, dass** das Hohlrad (11) drehbar aber linear unbeweglich im Gehäuse (2) gelagert ist und eine Rotation des Hohlrads (11) zu einer relativen linearen Bewegung des Sonnenradelements (13) führt und wobei das Sonnenradelement (13) mit dem Betätigungselement (20) verbunden ist, um dieses linear zu bewegen.

8. Das Pressgerät nach einem der vorhergehenden Ansprüche 5 bis 8, **dadurch gekennzeichnet, dass** das Sonnenradelement (13) eine Schneckenwelle (17) umfasst.

9. Das Pressgerät nach dem vorhergehenden Anspruch, **dadurch gekennzeichnet, dass** die Bewegungsrichtung des Betätigungselements (20) und die Achse der Schneckenwelle (17) parallel angeordnet sind und vorzugsweise koaxial angeordnet sind.

10. Das Pressgerät nach einem der vorhergehenden Ansprüche, **dadurch gekennzeichnet, dass** die Welle des Elektromotors (32) mit dem Planetengetriebe (10) über ein Getriebe (38) und/oder einen Riemen (34) verbunden ist.

11. Das Pressgerät nach einem der vorhergehenden Ansprüche, **dadurch gekennzeichnet, dass** der Elektromotor (30) ein bürstenloser Motor ist und wobei weiter vorzugsweise das Pressgerät (1) eine Steuerung (31) umfasst, die eingerichtet ist, um mittels der Hallsensoren des bürstenlosen Elektromotors (30) die Drehzahl des Motors und/oder die zurückgelegten Umdrehungen des Motors zu erfassen.

12. Das Pressgerät nach einem der vorhergehenden Ansprüche, **dadurch gekennzeichnet, dass** das Pressgerät eine Steuerung (31) umfasst, die eingerichtet ist den Motorstrom zu erfassen und den Motor (30) in Abhängigkeit eines erfassten Motorstromwerts oder eines Verlaufs des Motorstromwerts zu stoppen.

13. Das Pressgerät nach einem der vorhergehenden Ansprüche, **dadurch gekennzeichnet, dass** das Planetengetriebe (10) derart eingerichtet ist, dass eine Umkehrung der Motordrehrichtung zu einer Umkehrung der linearen Bewegungsrichtung des Betätigungselements (20) führt.

14. Das Pressgerät nach einem der vorhergehenden Ansprüche, **dadurch gekennzeichnet, dass** das Pressgerät (1) kein hydraulisches Pressgerät ist.

15. Das Pressgerät nach einem der vorhergehenden Ansprüche, **dadurch gekennzeichnet, dass** das Pressgerät (1) einen Pistolengriff (3) hat.
